**Europäisches Patentamt**

**European Patent Office**

**Office européen des brevets**

(19)

(11) Veröffentlichungsnummer : **0 267 925 B1**

(12) # EUROPÄISCHE PATENTSCHRIFT

(45) Veröffentlichungstag der Patentschrift :
**11.12.91 Patentblatt 91/50**

(51) Int. Cl.$^5$ : **H02K 41/03**

(21) Anmeldenummer : 87902422.2

(22) Anmeldetag : 06.05.87

(86) Internationale Anmeldenummer :
**PCT/DE87/00201**

(87) Internationale Veröffentlichungsnummer :
**WO 87/07453 03.12.87 Gazette 87/27**

(54) **LINEAREINHEIT.**

(30) Priorität : 30.05.86 DE 3618194

(43) Veröffentlichungstag der Anmeldung :
**25.05.88 Patentblatt 88/21**

(45) Bekanntmachung des Hinweises auf die
Patenterteilung :
**11.12.91 Patentblatt 91/50**

(84) Benannte Vertragsstaaten :
**CH DE FR GB IT LI**

(56) Entgegenhaltungen :
**FR-A- 2 458 494**
**Patent Abstracts of Japan, Band 4, Nr.**
**109(E-20)(591), 6. August 1980 & JP, A, 5566267**

(73) Patentinhaber : **ROBERT BOSCH GMBH**
**Postfach 50**
**W-7000 Stuttgart 1 (DE)**

(72) Erfinder : **GOSDOWSKI, Gerhard**
**Camberlystr. 83**
**W-7120 Bietigheim-Bissingen (DE)**
Erfinder : **KETTNER, Andreas**
**Zorndorfer Str. 8**
**W-7000 Stuttgart 31 (DE)**

## Beschreibung

### Stand der Technik

Die Erfindung geht aus von einer Lineareinheit nach der Gattung des Hauptanspruchs. Solche Einheiten werden beispielsweise als Handhabungsgeräte der industriellen Fertigung dazu verwendet, einen Gegenstand zu ergreifen um diesen in einer oder mehreren vorgegebenen Richtungen um bestimmte, zuvor eingegebene Beträge zu bewegen. Zum Antrieb des als Werkzeugträger dienenden Schlittens werden bevorzugt elektromagnetisch betriebene Linearmotoren eingesetzt, die bei einfachem Aufbau eine genaue Positionierung des Schlittens sicherstellen. Solche Antriebe mit einer Zahnstange aus magnetisch leitendem Material als Motorläufer und magnetisierbaren Motorständern sind in großer Zahl bekannt. Eine derartige Lineareinheit ist aus FR-A 2 458 494 bekannt, die mit einem in einem Halter längsverschiebbar geführten Schlitten und einem elektromagnetisch betriebenen Linearmotor versehen ist. Der mit dem Schlitten verbundene Läufer ist im Polspalt zweier einander gegenüberliegender Statoren angeordnet und ist aus einem Band mit einer aus magnetischem Metall bestehenden Zahnstruktur ausgebildet, wobei das Band mit seinen beiden Enden freitragend am Schlitten befestigt ist. Eine weitere Lineareinheit ist aus JP-A 5 566 267 bekannt, bei der der Läufer an der Umfangsfläche des Stators verschiebbar geführt ist und die Führungsflächen mit einer nicht magnetischen Gleitschicht versehen sind. Eine in der DE-OS 22 47 509 beschriebene Konstruktion benutzt als Zahnstange ein flexibles Band aus magnetischem Metall, das rechtwinklige Öffnungen aufweist, die auf der ganzen Länge senkrecht zur Bewegungsrichtung angeordnet sind und das in seiner ganzen Länge an einem massiven magnetischen Stab befestigt ist, dessen Stärke zur Schließung des Magnetflusses und zur Übertragung seiner Bewegung auf ein äußeres Organ ausreicht. Bei einer speziellen Ausführungsform sind zwei Bänder aus magnetischem Werkstoff vorgesehen, die auf zwei gegenüberliegenden Seiten eines an Wälz- oder Kugellagern geführten Stabes mit rechteckigem Querschnitt angebracht sind. Jedem Band ist ein Stator zugeordnet, der mehrere, mit Wicklungen versehene Polmassen aufweist, die gleichfalls je eine Verzahnung haben. Die einander zugekehrten Flächen der in den Bändern und den Polmassen ausgebildeten Zahnstrukturen liegen in zwei parallelen Ebenen mit einem Zwischenraum, der den Polspalt bildet.

### Vorteile der Erfindung

Die erfindungsgemäße Lineareinheit mit den kennzeichnenden Merkmalen des Hauptanspruchs hat demgegenüber den Vorteil, daß ein gesonderter, eine Präzisionslagerung benötigender, in sich starrer Träger für das die Zahnstruktur aufweisende Band entfällt. Die Statoren des Linearmotors, an deren den Polspalt begrenzenden Flächen das Band reibungsschlüssig geführt ist, bedürfen keiner exakten Ausrichtung bezüglich des anzutreibenden Schlittens, da das Band in einer Richtung, nämlich quer zum Polspalt, flexibel ist. Dadurch werden Ausrichtungsfehler durch die in Verschieberichtung außerhalb der Statoren befindlichen Bandabschnitte kompensiert, ohne daß der Polspalt selbst eine Veränderung erfährt.

Durch die in den Unteransprüchen aufgeführten Maßnahmen sind vorteilhafte Weiterbildungen und Verbesserungen der im Hauptanspruch angegebenen Lineareinheit möglich. Eine bevorzugte Ausführungsform besteht darin, daß das aus Metall bestehende Band mit die Zahnstruktur vorgebenden, rechtwinkligen Öffnungen versehen ist, die auf der ganzen Länge senkrecht zur Bewegungsrichtung des Bandes angeordnet sind, und daß die Führungsflächen des Bandes und/oder der Statoren mit einer nichtmagnetischen Gleitschicht, vorzugsweise einer kunststoff-Gleitschicht, versehen sind. Dadurch ergibt sich eine leichtgängige Gleitpaarung der Bauelemente mit sehr engem Polspalt und somit maximaler Motorleistung. Das Aufbringen besonderer Gleitschichten erübrigt sich, wenn das Band aus einem kunststoff besteht, der eine Zahnstruktur aus magnetischem Metall einschließt.

### Zeichnung

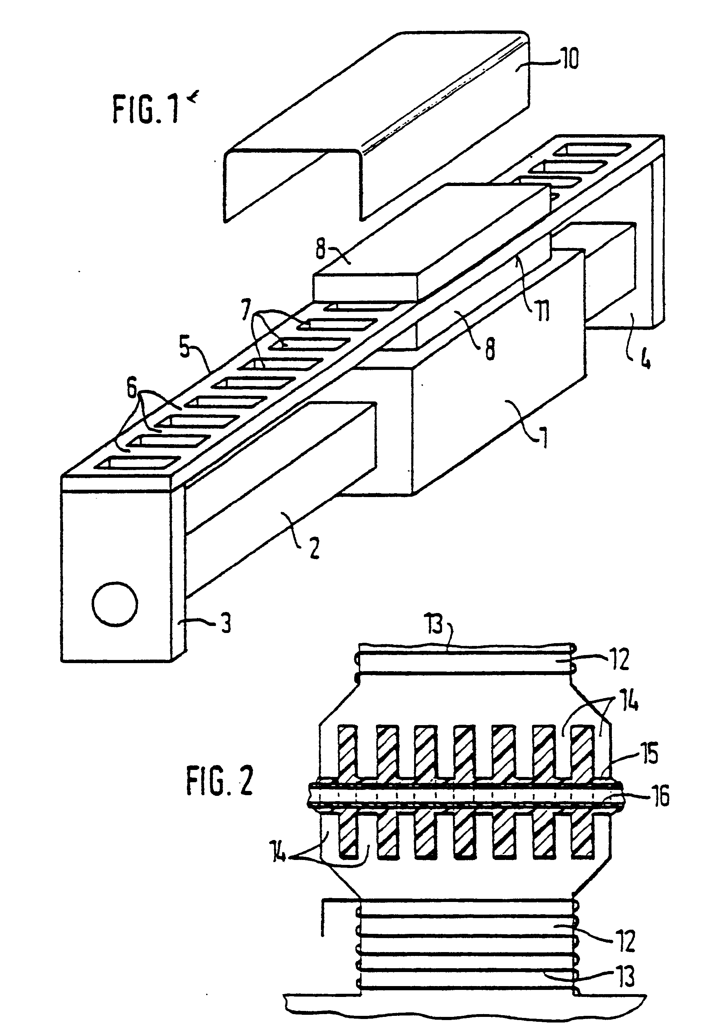

Ein Ausführungsbeispiel der Erfindung ist in der Zeichnung dargestellt und in der nachfolgenden Beschreibung näher erläutert. Es zeigen Figur 1 eine Lineareinheit in perspektivischer Ansicht, Figur 2 ein vergrößertes Detail der Anordnung nach Figur 1 in Seitenansicht.

### Beschreibung des Ausführungsbeispiels

Die Lineareinheit hat einen als Rohr ausgebildeten Halter 1, in welchem ein Schlitten 2 längsverschiebbar geführt ist. Das Rohr hat viereckigen, vorzugsweise rechteckigen Querschnitt und ist als Strangpreßkörper, vorzugsweise aus Aluminium oder einer Aluminiumlegierung, hergestellt. Der im Rohr verschiebbar geführte Schlitten 2 besteht aus einem Profilkörper mit annähernd quadratischem Querschnitt. Die beiden Stirnflächen des Schlittens sind mit je einer nach oben gerichteten Platte 3 bzw. 4 versehen, an denen ein flexibles Band 5 aus magnetischem Material mit seinen beiden Enden freitragend befestigt ist. Dieses Band bildet das bewegliche Element eines Linearmotors, auf das ein sich bewegendes Magnetfeld einwirkt. Das Band 5 weist Stege 6 auf, die durch Ausstanzen rechteckförmiger Aussparungen 7 im Band geschaffen wurden. Die Stege 6 verlaufen senkrecht zur Bewegungsrichtung des Schlittens 2 und haben gleichen Abstand voneinander. Sie bilden die Zahnstruktur des Bandes. Die zugehörigen Motorständer oder Statoren 8 sind an der Oberseite des Halters 1 befestigt und durch eine abnehmbare Haube 10 abgedeckt. Die Statoren liegen übereinander und schließen einen Polspalt 11 ein, in welchem das Band 5 geführt ist. Die Statoren bestehen vorzugsweise aus geschichteten Magnetblechen mit durch Aussparungen gebildeten Stegen 12, die je eine Erregerwicklung 13 tragen. An der dem Band 5 zugekehrten Flächen sind die Blechstapel mit Zähnen 14 versehen, welche parallel zu den Stegen 6 des Bandes 5 verlaufen, so daß die magnetische Querflußstrecke durch den Spalt 11 geschlossen wird.

Die dem Band 5 zugekehrten Flächen der Zähne 14 tragen eine Gleitschicht 15 aus nichtmagnetischem Material, vorzugsweise aus einem geeigneten Kunststoff. Die Zwischenräume zwischen den Zähnen 14 sind ausgegossen, wobei als Vergußmasse das gleiche Material verwendet werden kann wie für die Gleitschicht 15. Auf diese Weise werden an den Statoren durchgehende Planflächen geschaffen, an denen das Band 5 beidseitig geführt ist.

Die den Zähnen 14 zugekehrten Flächen des Bandes 5 sind gleichfalls mit einer Kunststoff-Gleitschicht 16 versehen, um die Gleitreibung zwischen den Teilen 5 und 8 zu verringern. Die Gleitschicht kann entweder vor oder nach dem Ausstanzen der Aussparungen 7 aufgebracht werden. Im ersten Fall bedeckt die Gleitschicht nur die Stege 6 und die Randbereiche des Bandes 5, während sie im Bereich der Aussparung 7 beim Ausstanzen derselben entfernt wird. Im zweiten Fall werden auch die Aussparungen mit dem Gleitmaterial ausgefüllt und es entstehen durchgehende Gleitflächen an beiden Seiten des Bandes 5.

Anstelle eines Bandes aus magnetischem Metall könnte auch ein Kunststoffband verwendet werden, in das eine magnetische Zahnstruktur eingebracht ist. Dadurch erübrigt sich das nachträgliche Aufbringen einer besonderen Kunststoff-Gleitschicht auf das Band.

Als Gleitschichtwerkstoffe eignen sich insbesondere Thermoplaste wie PA, POM, hochmolekulares PE und PTFE. Bei der Herstellung der Gleitschichten an den Statoren 8 kann so vorgegangen werden, daß die Zwischenraume zwischen den Zähnen 14 zunächst mit einem Gießharz ausgefüllt werden und sodann auf die Gießharzflächen und die Zahnflächen ein Überzug aus einem der genannten Stoffe aufgebracht wird.

Der Zahnstruktur 6, 7 benachbart könnte auf einer Seite des Bandes eine Verzahnung für einen elektromagnetischen Positionsmelder angebracht sein, welche durch Längsschlitze gegenüber der Verzahnung 6, 7 magnetisch abgeschirmt ist. Ein solches Meßsystem zeichnet sich durch hohe Genauigkeit und teilesparenden Aufbau aus.

## Patentansprüche

1. Lineareinheit mit einem in einem Halter (1) längsverschiebbar geführten Schlitten (2) und einem elektromagnetisch betriebenen Linearmotor, dessen mit dem Schlitten verbundener Läufer im Polspalt zweier einander gegenüberliegender Statoren (8) angeordnet ist und ein Band (5) mit einer aus magnetischem Metall bestehenden Zahnstruktur aufweist, wobei das Band mit seinen beiden Enden freitragend am Schlitten (2) befestigt ist, dadurch gekennzeichnet, daß das Band aus flexiblem Material besteht und an den Polspalt (11) begrenzenden Flächen (15) der Statoren (8) beidseitig geführt ist.

2. Lineareinheit nach Anspruch 1, dadurch gekennzeichnet, daß das aus Metall bestehende Band (5) mit die Zahnstruktur (6) vorgebenden rechtwinkligen Öffnungen (7) versehen ist, die auf der ganzen Länge senkrecht zur Bewegungsrichtung des Bandes angeordnet sind, und daß die Führungsflächen des Bandes und/oder der Statoren (8) mit einer nichtmagnetischen Gleitschicht (15 bzw. 16), vorzugsweise einer Kunststoff-Gleitschicht, versehen sind.

3. Lineareinheit nach Anspruch 1, dadurch gekennzeichnet, daß das Band aus einem Kunststoff besteht, der eine Zahnstruktur aus magnetischem Metall einschließt.

## Claims

1. Linear unit having a slide (2) guided in a longitudinally displaceable manner in a support (1) and an electromagnetically operated linear motor, whose rotor, connected to the slide, is arranged in the pole gap between two mutually facing stators (8) and has a band (5) with a toothed structure consisting of magnetic metal, the band being attached to the slide (2) in an unsupported manner by its two ends, characterised in that the band consists of flexible material and is guided on both sides on faces (15) of the stators (8) delimiting the pole gap (11).

2. Linear unit according to Claim 1, characterised in that the band (5) consisting of metal is provided with rectangular orifices (7) which predetermine the toothed structure (6) and are arranged over the entire length perpendicularly to the direction of movement of the band, and in that the guide faces of the band and/or of the stators (8) are provided with a non-magnetic sliding layer (15 and 16, respectively), preferably a plastic sliding layer.

3. Linear unit according to Claim 1, characterised in that the band consists of a plastic which encloses a toothed structure of magnetic material.

## Revendications

1. Unité linéaire avec un chariot (2) guidé longitudinalement dans un support (1) et un moteur linéaire à fonctionnement électromagnétique, dont l'induit lié au chariot est disposé dans l'entrefer entre deux stators (8) opposés et qui comporte une bande (5) avec une structure dentée en métal magnétique, la bande étant fixée sur le chariot avec ses deux extrémités en porte à faux, caractérisé en ce que la bande est constituée d'un matériau flexible et est guidée des deux côtés par les surfaces (15) limitant l'entrefer (11) des stators (8).

2. Unité linéaire conforme à la revendication 1, caractérisée en ce que la bande en métal (5) avec sa structure dentée (6) est prévue avec des ouvertures rectangulaires (7) disposées sur toute la longueur perpendiculairement à la direction du mouvement de la bande et en ce que les surfaces de guidage de la bande et/ou les stators (8) sont prévus avec une couche glissante non magnétique (respectivement 15 et 16), de préférence une couche glissante en matière plastique.

3. Unité linéaire conforme à la revendication 1, caractérisée en ce que la bande est constituée de matière plastique contenant une structure dentée en métal magnétique.

**FIG. 1**

**FIG. 2**